Europäisches Patentamt

European Patent Office

Office européen des brevets

(11) Publication number: 0 392 620
A2

# EUROPEAN PATENT APPLICATION

(21) Application number: 90200857.2

(22) Date of filing: 09.04.90

(51) Int. Cl.5: G11B 15/68, G11B 23/023

(30) Priority: 13.04.89 US 337623

(43) Date of publication of application:
17.10.90 Bulletin 90/42

(84) Designated Contracting States:
DE FR GB

(71) Applicant: Laser Magnetic Storage
International Company
4425 Arrows West Drive
Colorado Springs Colorado 80907(US)

(72) Inventor: Fago, Frank
c/o INT. OCTROOIBUREAU B.V. Prof.
Holstlaan 6
NL-5656 AA Eindhoven(NL)

(74) Representative: Van Weele, Paul Johannes
Frits et al
INTERNATIONAAL OCTROOIBUREAU B.V.
Prof. Holstlaan 6
NL-5656 AA Eindhoven(NL)

(54) Apparatus for automatically accessing cartridges in an array.

(57) An apparatus for randomly accessing a plurality
of magnetic recording cartridges comprises a maga-
zine for accepting an array of such cartridges, and
an elevator for accessing the several cartridges associated with the magazine and for delivering the
accessed cartridge to a tape transport unit. The
magazine and elevator are contained within a housing having an access door associated with its front,
and a selected tape transport unit associated with its
rear, operating within the enclosure which is defined
to avoid contact between the moving parts of the
apparatus and the unit's operator. Also the maga-
zine.

EP 0 392 620 A2

## APPARATUS FOR AUTOMATICALLY ACCESSING CARTRIDGES IN AN ARRAY

The present invention relates generally to random-access data storage devices, and in particular, to an apparatus for randomly accessing an array of magnetic recording cartridges associated with a tape transport unit.

Although a variety of systems have been developed for storing data on magnetic recording tape, particularly in connection with the off-line storage of data in the form of back-up storage, one format which has found particular acceptance in the industry derives from the Model 3480 tape cartridge developed by the IBM Corporation. Details regarding the construction of this type of tape cartridge (hereinafter referred to as a 3480 tape cartridge) are available with reference to United States Patent No. 4,452,406. However, by way of general description, the 3480 tape cartridge includes a single reel containing a quantity of magnetic tape and contained in a rectangular enclosure having dimensions on the order of 4 inches in width, 5 inches in length, and 1 inch in height. The cartridge enclosure includes an aperture in one of its major faces, to receive means for rotating the reel of tape contained within the cartridge, and an aperture in one of its corners for gaining access to the free end of the web of tape. A so-called "leader block" is connected to the free end of the web of tape, and is retained within the open corner of the cartridge so that it is capable of being withdrawn from and replaced within the cartridge by appropriate means associated with the tape transport unit with which it is used.

In view of the industry's acceptance of this product, primarily due to its compact size and ease in handling, a variety of devices have been developed to operate upon the 3480 tape cartridge. Recently this has led to the development of tape transport units which can operate upon the 3480 tape cartridge and which can fit within the "form factors" which are also recognized as standards in the mini/micro computer industry. For example, the "PATRIOT" tape transport unit manufactured by the Laser Magnetic Storage International Company is configured to accept a 3480 tape cartridge in an apparatus which is suited to a standard $5\frac{1}{4}$ inch form factor. More recently developed is the "INDEPENDENCE" tape transport unit, manufactured by the Laser Magnetic Storage International Company, which can accept a 3480 tape cartridge in an apparatus which is suited to a standard 8 inch form factor.

Of course, as is conventional, both the "PATRIOT" and "INDEPENDENCE" tape transport units are configured to operate upon only one 3480 tape cartridge at a time, i.e., the cartridge which has been introduced into the unit. However, it is often the case that significantly more storage capacity is required to satisfy a particular application. It is for this reason that steps have for some time been taken to develop devices for receiving a plurality of tape cartridges, such as the 3480 tape cartridge, and for selectively introducing one in the series of tape cartridges provided into the associated tape transport unit, as needed. While these devices have operated to satisfy the capacity requirements of most practical applications, such devices have been somewhat less than satisfactory in terms of their versatility.

For example, earlier attempts at such "auto-loading" or "stack-loading" devices involved the placement of a series of magnetic tape cartridges in a vertical array arranged so that the cartridges could be sequentially dropped to a loading position, for introduction into the associated tape transport unit. After use, each tape cartridge was then ejected from the tape transport unit and received in a collecting area. As a result of this, such approaches lacked the ability of returning to an earlier utilized tape cartridge since there was no way to return tape cartridges from the collecting area to the stack of cartridges which were addressable by the tape transport unit.

Recognizing this, steps were taken to develop devices capable of more randomly accessing an array of tape cartridges. To this end, devices were developed which employed a holder or magazine capable of accepting an array of tape cartridges and which was vertically movable relative to a stationary tape transport unit. In this fashion, a selected tape cartridge could be accessed upon its transfer from the magazine to the tape transport unit, and later returned to its original position following its use. While serving to permit a more random accessing of tape cartridges, as desired, such approaches nevertheless presented their own significant disadvantages.

Primarily, these disadvantages derived from the movable magazine used in conjunction with such systems. The prescribed movement of the magazine generally required a significant amount of free vertical space to permit the magazine to proceed through its full travel. Such space utilization was often limiting in practical application, and could at times even block other devices or their control functions. Yet another consideration was that of safety. Such devices also generally tended to incorporate exposed, moving parts which could be accessed by the hands of an operator, or which could entrain an article of clothing. Yet another disadvantage of such systems was a general limitation in the ability of the operator to freely access the array of tape cartridges, for insertion or removal from the unit. Generally, this was only possible after discontinuing further operation of the device, so that the magazine could be removed from its associated drive to permit the cartridges to be exchanged as desired.

It therefore remained to develop a system for randomly accessing a plurality of tape cartridges which was better suited to its intended environment, both in terms of its utilization and in terms of its safety.

It is therefore the primary object of the present invention to provide an apparatus for randomly accessing a plurality of magnetic recording cartridges.

It is also an object of the present invention to provide an apparatus for randomly accessing a plurality of magnetic recording cartridges housed in a convenient, removable, easily used and stored magazine.

It is also an object of the present invention to provide an apparatus for randomly accessing a plurality of magnetic recording cartridges which is compact and which requires a minimal amount of operating space.

It is also an object of the present invention to provide an apparatus for randomly accessing a plurality of magnetic recording cartridges which is self-contained so as to prevent contact with moving parts of the system.

It is also an object of the present invention to provide an apparatus for randomly accessing a plurality of magnetic recording cartridges which is specially adapted to accept a plurality of 3480 tape cartridges, for selected delivery to a tape transport unit adapted for receiving such cartridges.

It is also an object of the present invention to provide an apparatus for randomly accessing a plurality of magnetic recording cartridges which provides the operator with versatility in determining the manner in which the cartridges associated with the system are accessed and delivered to the tape transport unit.

These and other objects are achieved in accordance with the present invention by providing an apparatus for randomly accessing a plurality of magnetic recording cartridges which generally comprises a magazine for accepting an array of such cartridges, and an elevator for accessing the several cartridges associated with the magazine and for delivering the accessed cartridge to a tape transport unit. The magazine and elevator are contained within a housing having an access door associated with its front, and a selected tape transport unit associated with its rear, operating within the enclosure which is defined to avoid contact between the moving parts of the apparatus and the unit's operator.

The magazine is configured to house an array of magnetic recording cartridges in a series of slots which are configured to effectively receive each cartridge, and to safely retain each cartridge within its respective slot until it is to be accessed by the elevator. The magazine is further made removable from the unit, to promote interchangability and to facilitate the placement of cartridges within the magazine. However, if desired, magnetic recording cartridges are additionally capable of being inserted into the magazine through the access door associated with the apparatus, with the magazine in place, providing significant versatility in cartridge interchangability.

The elevator is configured for vertical movement along the magazine to selectively access one of the cartridges according to control signals received from a controlling processor. Included are both sequential and random accessing functions, to provide the operator with versatility in accessing tape cartridges contained within the magazine. To this end, the elevator is caused to proceed along a vertical path, by an appropriate motor drive, until the elevator is positioned adjacent to the tape cartridge which is to be accessed. The elevator then operates to grip the accessed tape cartridge and to move the accessed tape cartridge from the magazine to the elevator, for subsequent delivery to the tape transport unit. At the tape transport unit, the elevator operates to transfer the tape cartridge from the elevator to the tape transport unit. Following desired operations upon the selected tape cartridge, steps are then taken to reverse this process and return the accessed tape cartridge to its original slot in the magazine (or to a different slot, if desired).

Such structure affords significant versatility in accessing an array of magnetic recording cartridges in any selected order or sequence, as desired by the operator. What is more, the apparatus is convenient to use, and provides a safe environment adapted to prevent undesirable contact between moving parts of the system and the system's operator.

For further detail regarding a preferred embodiment apparatus in accordance with the present invention, reference is made to the detailed description which is provided below, taken in conjunction with the following illustrations.

Figure 1 is a perspective view of an apparatus for randomly accessing a plurality of magnetic recording cartridges, in accordance with the present invention.

Figure 2 is an exploded, partially sectioned view of the apparatus shown in Figure 1.

Figure 3 is a side elevational view of the apparatus shown in Figure 1, with its side panel removed to show internal construction detail.

Figure 4 is an enlarged perspective view of the magazine used in conjunction with the apparatus shown in Figure 1.

Figure 5 is a cross-sectional view of the magazine shown in Figure 4, taken along the line 5-5.

Figure 6 is a partial, cross-sectional view of an alternative embodiment releasing mechanism for one of the verification levers of the magazine.

Figure 7 is a partial, side elevational view of an alternative embodiment mechanism for releasing the magazine from the accessing apparatus.

Figure 8 is a bottom plan view of the elevator of the apparatus shown in Figure 1.

Figure 9 is a top plan view of the elevator shown in Figure 8.

Figure 10 is a sectional view of the elevator shown in Figure 8, taken along the line 8-8.

In the several views provided, like reference numerals denote similar structure.

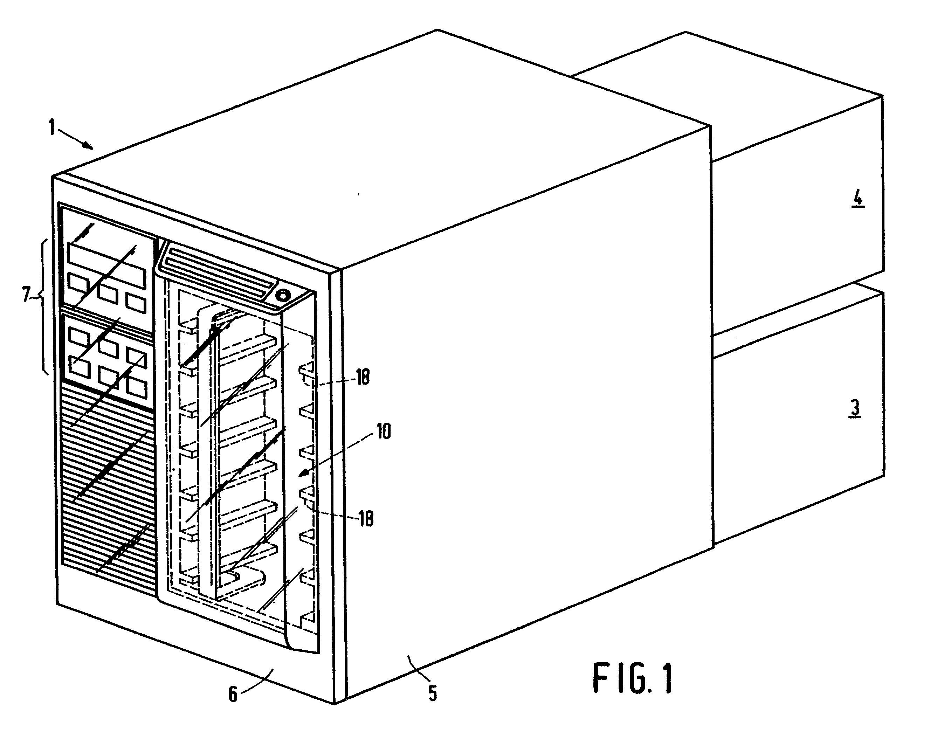

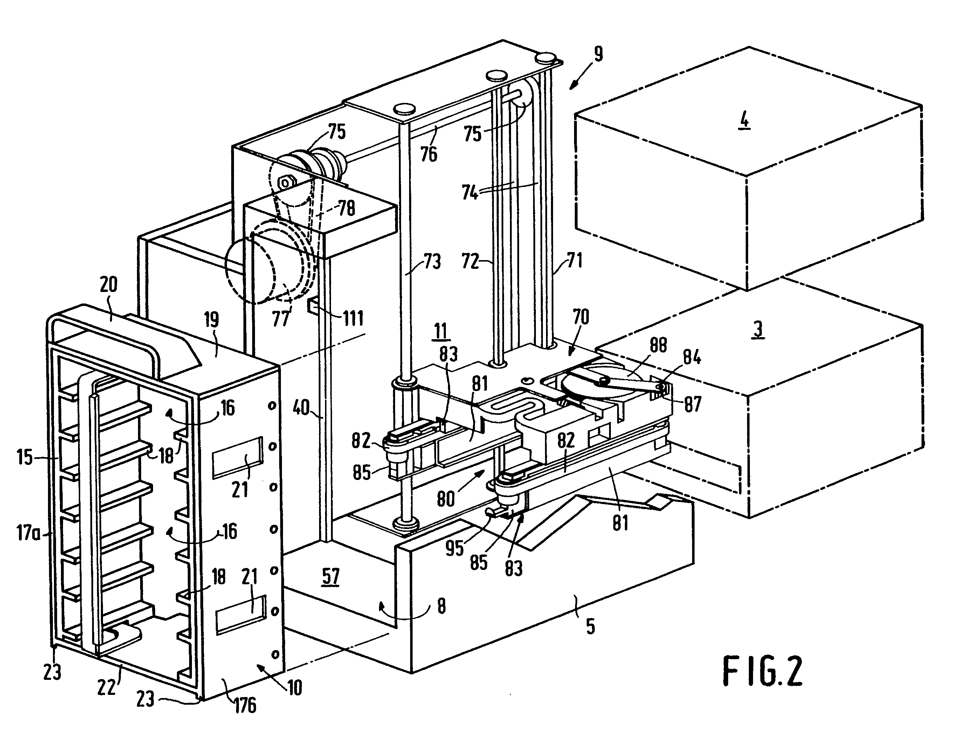

Figure 1 generally illustrates an apparatus 1 for randomly accessing a plurality of tape cartridges 2, for selective introduction into a tape cartridge unit 3 associated with the accessing apparatus 1. Referring now to Figures 1-3, the accessing apparatus 1 takes the form of a housing 5, the front of which is provided with an access door 6 and a series of controls 7 for operating the accessing apparatus 1, and the rear of which is fitted with the tape cartridge unit 3 and the formatter control interface 4 which is generally associated with the tape cartridge unit 3 to accomplish its required operations.

The housing 5 of the accessing apparatus 1 is generally separated into two regions 8, 9. The region 8 is provided to accept a magazine 10 for receiving an array of tape cartridges 2. The region 9 is provided with an elevator mechanism 11 for selectively accessing the tape cartridges 2 housed in the magazine 10, and for delivering the accessed tape cartridge 2 to the tape cartridge unit 3 associated with the rear of the housing 5.

At this point it should be noted that both the magazine and the tape cartridge unit 3 which are illustrated in the drawings are specifically configured to accommodate a 3480 tape cartridge of the type manufactured by the IBM Corporation. Further detail regarding the manner in which the magazine 10 is configured to accept the 3480 tape cartridge will be discussed below. The tape cartridge unit 3 preferably takes the form of a "PATRIOT" or "INDEPENDENCE" tape transport unit of the type manufactured by the Laser Magnetic Storage International Company of Valley Forge, Pennsylvania, or other equivalent unit. In any event, it is to be understood that although the accessing apparatus 1 illustrated in the drawings is specifically intended for use in conjunction with 3480 tape cartridges, and tape transports for operating upon them, the accessing apparatus 1 of the present invention will also have applicability to other types of tape cartridges, and to other types of tape cartridge handling devices, to selectively access the tape cartridges which are provided for introduction into the tape cartridge handling device which is selected for use in that particular application.

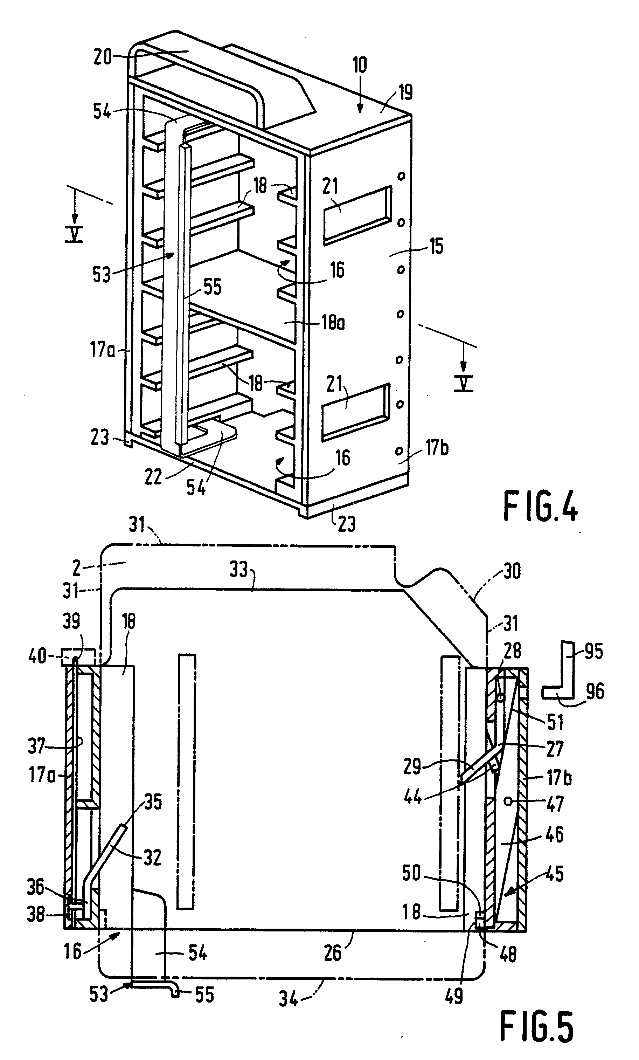

Figures 4 and 5 further illustrate the structure of the magazine 10. The magazine 10 generally takes the form of an enclosure 15 having a series of slots 16 for receiving the desired array of tape cartridges. The slots 16 are generally defined by opposing side walls 17a, 17b of the enclosure 15, and a series of ribs 18 extending from the side walls 17a, 17b to define shelves for receiving the tape cartridges. An extented shelf 18a preferably connects the side walls 17a, 17b, as shown, to provide the enclosure 15 with added structural integrity.

As illustrated, a series of seven slots 16 are provided, to receive an array of seven tape cartridges. However, it will be understood that while this is preferred, the number of slots 16 associated with the magazine 10 may be varied as desired. It will further be understood that the slots 16 are configured to slidingly yet closely receive the tape cartridges which are to be received by the magazine 10, and that these dimensions will also vary depending upon the tape cartridges which have been selected for use in a particular application.

For ease of handling, the top 19 of the enclosure 15 is provided with a handle 20 for use in carrying the magazine 10, and for inserting (and withdrawing) the magazine 10 into the region 8 of the accessing apparatus 1 as will be described more fully below. The side wall 17b of the enclosure 15 is further provided with one or more notches 21 which are configured to correspond with one or more projections (not shown) extending from the opposing side wall 17a of the magazine 10, to provide the magazine 10 with a nesting feature for storage purposes. The bottom 22 of the enclosure 15 is provided with a pair of flanges 23 which serve as supports for the enclosure 10 when located outside of the accessing apparatus 1, and for securing the magazine 10 within the region 8 of the accessing apparatus 1 when in place.

Figure 5 illustrates further detail regarding a slot 16 of the magazine 10. As shown, a tape cartridge 2 (shown in phantom) is slidingly received within the slot 16, extending between the side walls 17a, 17b of the enclosure 15, and resting upon the shelf-defining ribs 18 associated with that particular slot 16. Each slot 16 is additionally provided with various features for appropriately securing the tape cartridge 2 within its respective slot 16, both when the magazine 10 is removed from the accessing apparatus 1, as well as when the magazine 10 is installed within the accessing apparatus 1, ready for operation as will be described more fully below.

In considering these various features, it should be kept in mind that the magazine 10 must operate to provide different functions when outside of the accessing apparatus 1, and when installed within the accessing apparatus 1. Specifically, when outside of the accessing apparatus 1, steps must be taken to make sure that tape cartridges are not improperly inserted into the magazine 10, and that housed tape cartridges 2 are positively retained within the magazine 10 to prevent them from falling out while the magazine 10 is being handled. When positioned within the accessing apparatus 1, steps must be taken to make sure that the tape cartridges 2 are readily accessible by the elevator mechanism 11, and to permit a proper insertion or removal of a tape cartridge 2 from the magazine 10 in the course of operating the accessing apparatus 1. The various features which are provided to accomplish this will now be described.

When the magazine 10 is removed from the accessing apparatus 1, steps are taken to make sure that tape cartridges can be effectively inserted into the various slots 16 of the enclosure 15 in their proper orientation, preferably from the front 26 of the enclosure 15, and to prevent improper insertions from taking place. The width and height of each slot 16 will to a large extent regulate placements of a tape cartridge 2 within the slot 16, except for assurances that the tape cartridge 2 has been placed right side up within the slot 16. To this end, a verification lever 27 is provided along the side wall 17a of the enclosure 15.

The verification lever 27 is disposed to rotate about a pivot 28 and is generally configured and biased (by a spring or equivalent structure) to assume the position shown in Figure 5 of the drawings, with its end 29 extending into the slot 16. When a tape cartridge 2 is properly inserted into the slot 16, the end 29 of the verification lever 27 will come into contact with the sloping corner 30 which is conventionally formed in the tape cartridge 2 (to provide access to the leader block of the tape cartridge). The end 29 of the verification lever 27 will then ride along the sloping face of the corner 30, in turn causing the verification lever 27 to rotate out of the slot 16 and into the side wall 17b, and permitting the tape cartridge 2 to enter the slot 16. If it is attempted to insert an inverted or rotated tape cartridge 2 into the slot 16, the end 29 of the verification lever 27 will encounter a flat face 31 of the tape cartridge 2. Since this will not operate to cause the verification lever 27 to rotate, further insertion of the tape cartridge 2 will be prevented. To be noted is that the verification lever 27 will have no effect upon a tape cartridge which is later to be withdrawn from or inserted into a slot 16 in the course of operating the accessing apparatus 1, so as not to inhibit such functions.

Yet another verification lever 32 is provided in the opposing side wall 17a of the slot 16, and in this case operates to prevent tape cartridges from being inserted into the slot 16 from the rear 33 of the magazine 10. To be noted is that this inhibiting function will result irrespective of the orientation of the tape cartridge 2 which is attempted to be inserted into the slot 16 from the rear, since in either orientation the verification lever 32 will encounter the flat (front) face 34 of the tape cartridge 2, the flat (rear) face 31 of the tape cartridge 2, or interfering flanges (not shown) conventionally associated with the leader block receiving portions of the tape cartridge 2. Further to be noted is that the verification lever 32 will in no way inhibit an insertion of a tape cartridge 2 into the slot 16 from the front 26 of the magazine 10, when desired. Since the several verification levers 27, 32 are independent of one another in terms of their operation, these various functions are assured even if one of the individual verification levers is in some way compromised.

When operating the accessing apparatus 1, steps must be taken to withdraw the verification lever 32 from the slot 16, to permit a tape cartridge 2 to be freely inserted into the slot 16 from the rear 33 of the magazine 10 (following operation upon the tape cartridge). To this end, the verification lever 32 is disposed to rotate about a pivot 36 responsive to a push rod 37 which contacts an end 38 of the verification lever 32 and which extends from the rear 39 of the side wall 17a as shown. When the magazine 10 is inserted into the region 8 of the accessing apparatus 1, the end 39 of the push rod 37 is brought into contact with a plate 40 associated with the accessing apparatus 1, causing the end 35 of the verification lever 32 to rotate into the side wall 17a of the slot 16, achieving the desired result.

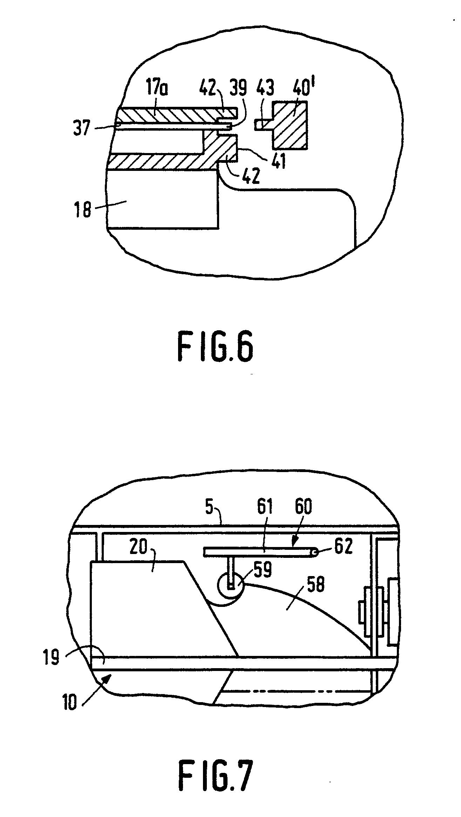

To be noted is that a potential exists for the end 39 of the push rod 37 which operates the verification lever 32 to be inadvertently depressed by an operator when the magazine 10 is removed from the accessing apparatus 1. Since this could permit an improper insertion of a tape cartridge 2 from the rear 33 of the magazine 10, steps can be taken to prevent this occurrence by modifying the side wall 17a as shown in Figure 6 of the drawings. To this end, the rear face 41 of the side wall 17a is provided with a pair of projections 42 which surround the end 39 of the push rod 37. The plate 40 is provided with a corresponding projection 43 which again operates to depress the end 39 of the push rod 37 when the magazine 10 is installed in the region 8 of the accessing apparatus 1, without permitting an operator to inadvertently depress the end 39 of the lever 37 when the magazine 10 is removed from the accessing apparatus 1.

The magazine 10 is further provided with means for retaining inserted tape cartridges 2 within their respective slots 16, to prevent the tape cartridges 2 from leaving the slots 16 of the magazine 10 (and possibly becoming damaged), particularly when the magazine 10 is removed from the accessing apparatus 1. To this end, a latch mechanism 45 is provided in the side wall 17b of the enclosure 15. The latch mechanism 45 includes a latch 46 which is disposed to rotate about a pivot 47, and which is provided with a catch 48 configured and biased (e.g., by the molded spring 44) to extend from the side wall 17b of the enclosure 15 and into contact with a notch 49 which is conventionally provided in the tape cartridge 2.

In this manner, the catch 48 and the notch 49 cooperate to stop and retain an inserted tape cartridge 2 within its respective slot 16 until such time that it becomes desirable to remove the tape cartridge 2 from its slot 16. When the magazine 10 is removed from the accessing apparatus 1, this is accomplished by pulling on the tape cartridge 2 so that the tapered rear face 50 of the catch 48 is forced out of the notch 49 of the tape cartridge 2, permitting its withdrawal from the slot 16. When the magazine 10 is installed in the accessing apparatus 1, and it is desired to withdraw the tape cartridge 2 from its slot 16, this is accomplished by causing the elevator mechanism 11 (as will be described below) to apply a force to the end 51 of the latch 46, withdrawing the catch 48 from the notch 49 and releasing the tape cartridge 2 for further handling. To be noted is that the latch mechanism 45 will in no way inhibit the insertion of tape cartridges into the slots 16 of the magazine 10, either when removed from the accessing apparatus 1 or when installed within the accessing apparatus 1, since the sloping surface of the corner 30 of the tape cartridge 2 will operate to depress the catch 48 of the latch 46, permitting the tape cartridge 2 to pass the latch mechanism 45 until the catch 48 is aligned with the notch 49, stopping and seating the tape cartridge 2 within the slot 16 of the magazine as previously described.

The magazine 10 is further provided with a cartridge stop 53 which is disposed to prevent tape cartridges from leaving the front 26 of the enclosure 15, by engaging the front face 34 of a tape cartridge 2 in such case. The primary function of the cartridge stop 53 is to prevent a tape cartridge 2 from leaving the slot 16 in the course of being returned to the magazine 10 after it has been operated upon by the tape cartridge unit 3, as will be described more fully below, and to retain tape cartridges within their respective slots 16 when the magazine 10 is removed from the accessing apparatus 1.

It will be understood that the cartridge stop 53 must be removed from in front of the slot 16 when a tape cartridge 2 is to be inserted into or withdrawn from the magazine 10. To this end, flanges 54 extending from the cartridge stop 53 are pivotally associated with the top 19 and bottom 22 of the enclosure 15, as is best illustrated in Figure 4 of the drawings. The cartridge stop 53 is further provided with a rounded edge 55 to assist in removing the cartridge stop 53 from in front of the magazine 10 when inserting a tape cartridge into a slot 16 or when withdrawing a tape cartridge from a slot 16, either using the operator's hand, or by pushing against the edge 55 with the tape cartridge 2 which is being handled.

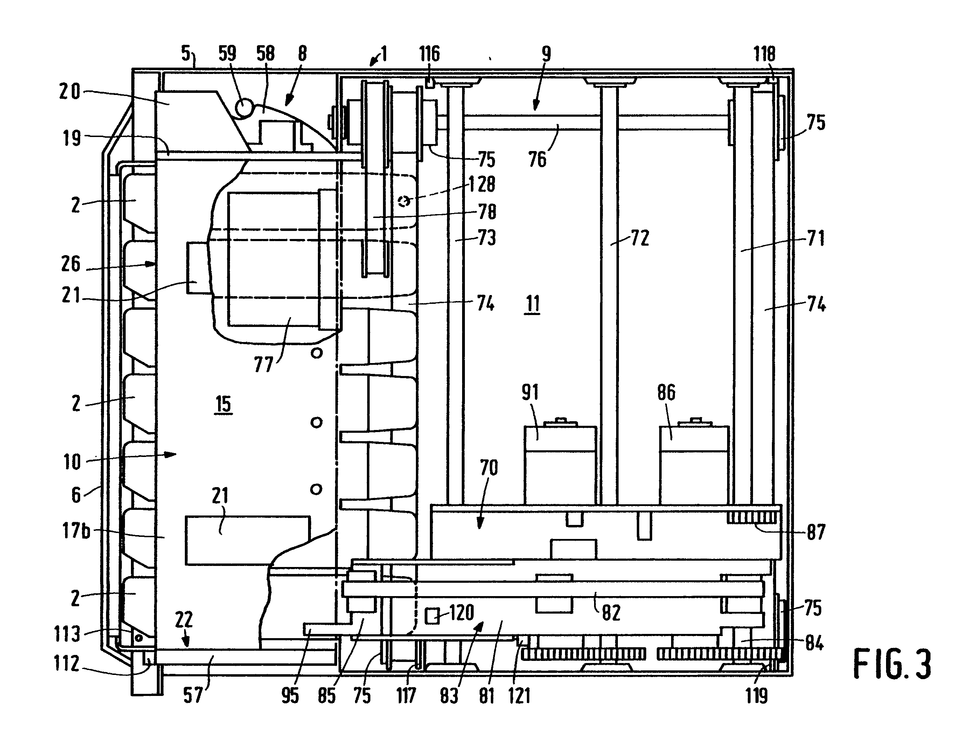

The manner in which the magazine 10 is inserted into the accessing apparatus 1 is best illustrated in Figure 3 of the drawings. As indicated, the magazine 10 is received within the region 8 of the accessing apparatus 1 so that the flanges 23 extending from the bottom 22 of the enclosure 15 are received within a trap 57 formed at the bottom of the region 8, and so that a flange 58 extending from the top 19 of the enclosure 15 is engaged by a spring-loaded locating pin 59 which extends into the top of the region 8. The plate 40 provided for releasing the verification levers 32 serves to assist in locating the magazine 10 by providing a guide for the magazine 10 as it is inserted into the region 8 of the accessing apparatus 1. In any event, this operates to position and secure the magazine 10 within the region 8 so that the housed tape cartridges 2 extend from the rear of the enclosure 15, ready for accessing by the elevator mechanism 11. To be noted is that this also brings the ends 39 of the push rods 37 associated with the magazine 10 into engagement with the plate 40, withdrawing the verification levers 32 from the slots 16 as previously described. Removal of the magazine 10 is accomplished by reversing the above steps.

Figure 7 shows an alternative embodiment releasing mechanism 60 which serves to provide a more positive releasable engagement between the locating pin 59 and the flange 58 of the magazine 10, if desired. The releasing mechanism 60 includes a release plate 61 which is movable about a pivot 62 and which is connected to the locating pin 59. The release plate 61 is easily accessed by the fingers of the operator's hand as the handle 20 of the magazine 10 is grasped. Depressing the release plate 61 provides for a positive release of the locating pin 59, freeing the magazine 10 for removal from the accessing apparatus 1.

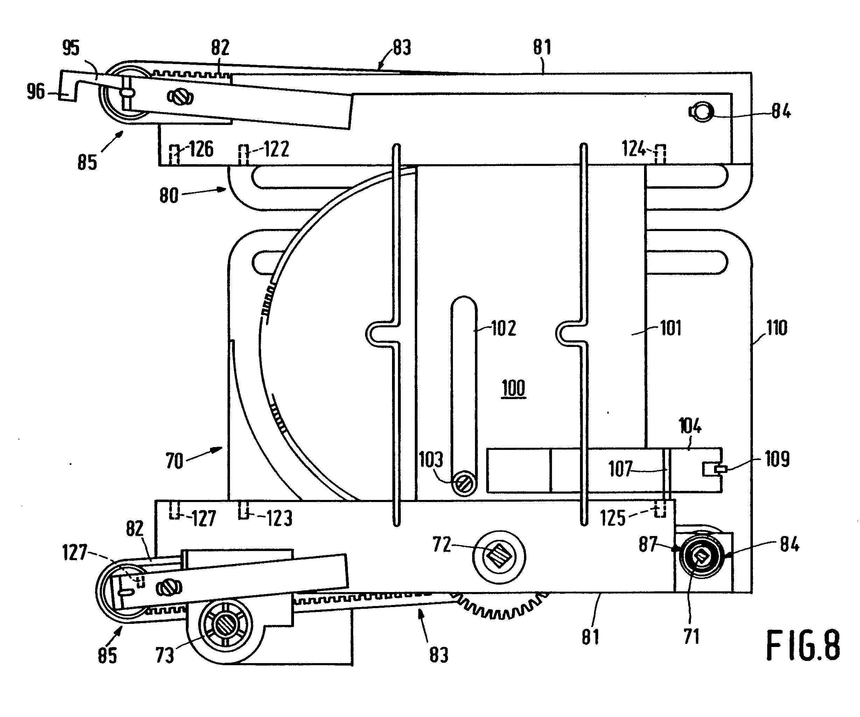

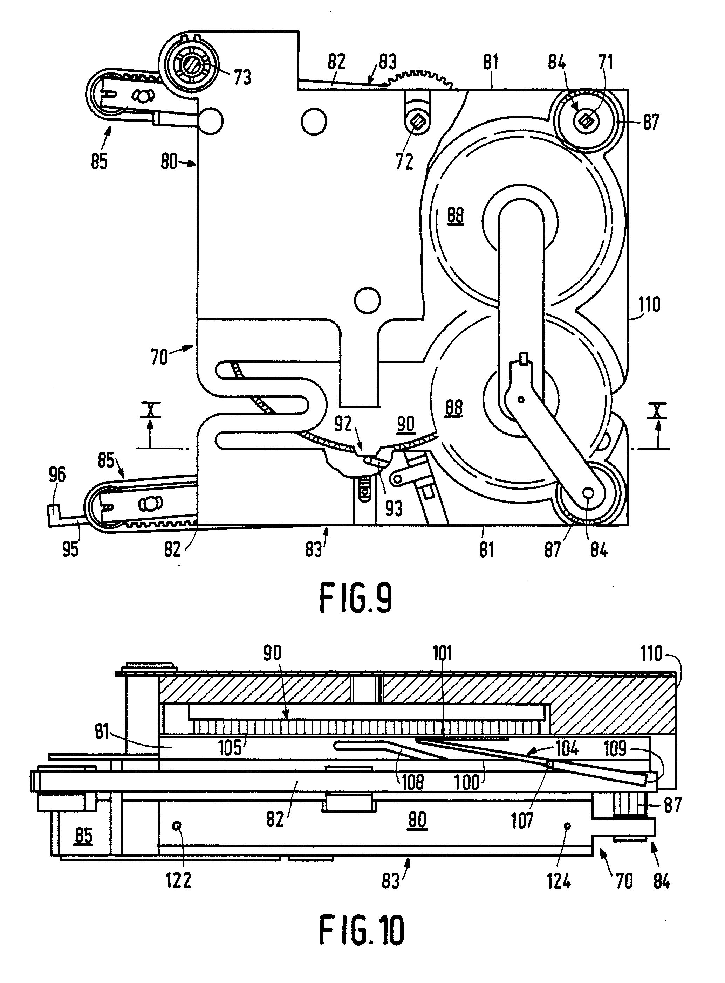

Referring now to Figures 3 and 8 to 10, the elevator mechanism 11 generally takes the form of an elevator 70 adapted for movement within the region 9 of the accessing apparatus 1 along a series of guide rails 71, 72, 73 (the guide rail 73 serves as a stationary guide for the elevator 70). Movement of the elevator 70 is accomplished by a pair of drive belts 74 which engage opposite sides of the elevator 70. The drive belts 74 are received by paired pulleys 75 disposed upon a common drive shaft 76. The drive shaft 76 is in turn rotated responsive to a motor 77 fixed to the frame of the accessing apparatus 1, by means of an interconnecting drive belt 78. The drive motor 77 is preferably a stepper motor to permit the elevator 70 to be effectively positioned along the magazine 10 responsive to signals received from a controlling processor (not shown) associated with the controls 7 of the accessing apparatus 1.

The elevator 70 operates to define an enclosure 80 for receiving a tape cartridge 2 while it is being transported between its slot 16 in the magazine 10 and the tape cartridge unit 3. The height and width of the enclosure 80 are generally sufficient to slidingly receive a conventional tape cartridge 2. Opposing sides 81 of the enclosure 80 are further provided with a pair of vertical drive belts 82 for moving a tape cartridge 2 within the enclosure 80 as will be discussed more fully below. To this end, each of the vertical drive belts 82 are received upon a frame 83 which is disposed to rotate about a pivot 84. This permits the opposing ends 85 of the frames 83 to be moved toward and away from one another, and the tape cartridge 2 which is to be handled, for movement within the enclosure 80 of the elevator 70.

The vertical drive belts 82 are operated responsive to a drive motor 86 associated with the frame of the accessing apparatus 1. The drive motor 86 communicates with the guide rail 71, which takes the form of a squared shaft configured to engage one of the drive rollers 87 associated with the vertical drive belts 82. The remaining drive roller 87 is rotated through a series of gears 88 which operate to move the vertical drive belts 82 at the same speed and in opposite directions, to properly move the tape cartridge 2 within the confines of the enclosure 80.

Movement of the ends 85 of the vertical drive belts 82 toward and away from each other is accomplished by a cam 90 associated with the elevator 70. The cam 90 is rotated by a drive motor 91 associated with the frame of the accessing apparatus 1, making use of a second one of the guide rails 72 (which is again squared for driving purposes). The cam 90 is provided with a pair of lobes 92 for engaging followers 93 associated with the frames 83 which receive the vertical drive belts 82. Accordingly, as the lobes 92 of the cam 90 are brought into engagement with the followers 93 of the frames 83, the frames 83 are caused to rotate so that their ends 85 move toward each other, and the center of the enclosure 80, bringing the vertical drive belts 82 into contact with a tape cartridge, as desired. The vertical drive belts 82 are then operated to move the tape cartridge 2 within the enclosure 80 of the elevator 70, as appropriate.

As previously indicated, in order to withdraw a tape cartridge 2 from one of the slots 16 of the magazine 10, steps must be taken to release the latch mechanism 45 associated with the magazine 10. To this end, and referring now to Figure 5 of the drawings, one of the frames 83 which receive the vertical drive belts 82 is further provided with a releasing arm 95 which incorporates a releasing pin 96 for engaging and depressing the end 51 of the latch 46, thereby permitting the tape cartridge 2 to be withdrawn from the slot 16 (or returned to the slot 16) as the ends 85 of the frames 83 are brought together as previously described.

Yet another consideration is that while the vertical drive belts 82 will provide a sufficient amount of travel to withdraw tape cartridges from the magazine 10, to regulate movement of the tape cartridges within the enclosure 80 of the elevator 70, and to return the tape cartridges to the slots 16 of the magazine 10, the travel of the vertical drive belts 82 will be insufficient to fully insert a tape cartridge 2 into the tape cartridge unit 3. The extra travel necessary for this is provided by a pusher assembly 100.

The pusher assembly 100 generally includes a drive plate 101 having a slot 102 for receiving a pin 103 extending from the cam 90 of the elevator 70, and a pusher plate 104 extending from the drive plate 101. The drive plate 101 is further received within a pair of slots 105 formed in the opposing side walls 81 of the elevator 70, to guide reciprocation of the drive plate 101 responsive to rotation of the cam 90. The pusher plate 104 further incorporates a guide pin 107 which cooperates with a configured slot 108 formed in one of the side walls 81 of the elevator 70, to raise and lower the end 109 of the pusher plate 104 as the drive plate 101 is reciprocated within the guiding slots 105.

As a result of this, as the drive plate 101 is urged toward the rearward end 110 of the elevator 70, the pusher plate 104 is brought down into the enclosure 80 defined by the elevator 70. This serves to engage a tape cartridge 2 located within the enclosure 80 and ready for insertion into the tape cartridge unit 3 (initially only partially inserted by the drive belts 82). Further advancement of the pusher plate 104 engages the tape cartridge 2, pushing the tape cartridge 2 fully into the tape cartridge unit 3. Following this, the drive plate 101 is retracted by rotating the cam 90 in the opposite direction, in turn withdrawing the pusher plate 104 from the enclosure 80, and readying the elevator 70 to receive the tape cartridge 2 when released from the tape cartridge unit 3, following desired operations upon it.

Having described the various components comprising the accessing apparatus 1, its manner of operation will now be described in further detail.

It shall first be assumed that the magazine 10 is withdrawn from the accessing apparatus 1, and ready to receive tape cartridges 2. Tape cartridges 2 are then inserted into the slots 16 of the magazine 10, from the front 26, as desired. The slanted corner 30 of each tape cartridge 2 will permit the tape cartridge 2 to enter its desired slot 16 by passing the catch 48 of the latch mechanism 45 and the end 29 of the verification lever 27, provided that the tape cartridge 2 has been inserted into its slot 16 in its correct orientation. Otherwise, the verification lever 27 will operate to prevent further insertion of the tape cartridge 2 into the slot 16. A proper insertion will continue until such time as the notch 49 provided in the tape cartridge 2 is engaged by the catch 48 of the latch mechanism 45, securing the tape cartridge 2 in position as desired. To be noted is that in the course of this loading procedure, the cartridge stop 53 will have to be pushed aside to permit each tape cartridge 2 to enter its desired slot 16. Attempts to insert tape cartridges from the rear of the magazine 10 will be prevented by the verification lever 32.

Once filled (or partially filled) with tape cartridges 2, the magazine 10 is then ready for insertion into the region 8 of the accessing apparatus 1. This is preferably accomplished by placing the magazine 10 into the region 8 at a generally downward angle which causes the flanges 23 at the bottom 22 of the enclosure 15 to be received within the trap 57 of the accessing apparatus 1, and by then moving the top 19 of the enclosure 15 toward the accessing apparatus 1 until the flange 58 of the enclosure 15 passes the locating pin 59. This then readies the magazine 10 for further operations of the accessing apparatus 1, including bringing the ends 39 of the push rods 37 which operate the verification levers 32 into contact with the plate 40 which causes the verification levers 32 to be removed from the slots 16 as previously described. To be noted is that following installation of the magazine 10 within the accessing apparatus 1, steps can still be taken to withdraw and insert tape cartridges 2, as desired, from the front of the accessing apparatus 1 (through the access door 6).

Insertion of the magazine 10 into the accessing apparatus 1 is verified by a sensor 111 associated with the frame of the accessing apparatus 1, which must be satisfied prior to further operation of the accessing apparatus 1. It must also then be verified that the access door 6 of the housing 5 has been closed, to prevent operation of the accessing apparatus 1 when the door is open (for safety and/or security reasons). A sensor 112 is therefore provided to detect this event, and enable the accessing apparatus 1 for further operation. Also preferably provided is a solenoid 113 (preferably a bistable solenoid to account for power failures) which can be activated to lock the access door 6 in a closed position during subsequent operations of the accessing apparatus 1 (i.e., when parts are moving within the unit). Alternatively, steps can be taken to deactivate the accessing apparatus 1 in the event that the access door 6 is opened, responsive to signals received from the sensor 112.

Before operating the accessing apparatus 1, it must also be verified that all tape cartridges 2 are properly seated within the accessing apparatus 1, to make sure that movements of the elevator 70 do not cause damage to a tape cartridge which is improperly positioned. To this end, a first pair of sensors 116, 117 are positioned to sight from the top to the bottom of the region 9, adjacent to the magazine 10, to make sure that the tape cartridges 2 are fully seated within their respective slots 16, and to make sure that a tape cartridge 2 does not improperly extend from the enclosure 80 of the elevator 70. A second pair of sensors 118, 119 are positioned to sight from the top to the bottom of the region 9 adjacent to the tape cartridge unit 3, to make sure that a tape cartridge 2 is neither projecting from the tape cartridge unit 3, nor the enclosure 80 of the elevator 70. A variety of devices may be used for this purpose, with infrared sensors being preferred. It is only upon detecting a clear path along these regions that further operation of the accessing apparatus 1 is enabled.

Following the operator's requirements as established using the controls 7 associated with the accessing apparatus 1, the elevator 70 is caused to move adjacent to the tape cartridge 2 which is to be accessed. This is generally accomplished by rotation of the motor 77. As previously indicated, the motor 77 is preferably a stepper motor. To initiate (define the origin) for the motor 77, a sensor 120 is provided to establish a "home" position for the elevator 70, which operates as a reference for rotating the motor 77. From this initial position, appropriate counting techniques are utilized to position the elevator 70 as desired. To be noted is that a similar sensor 121 is provided to initialize the positioning of the cam 90, to reference its subsequent operation as well.

Following this, the motor 91 is operated to close the ends 85 of the vertical drive belts 82 over the tape cartridge 2 which is to be withdrawn from the magazine 10, responsive to operation of the cam 90 on the frames 83 which receive the vertical drive belts 82. The motor 86 is then operated to move the drive belts 82 in a direction which serves to withdraw the tape cartridge 2 from its slot 16, causing the tape cartridge 2 to enter the enclosure 80 of the elevator 70.

Operation of the motor 86 is regulated responsive to paired sensors 122, 123 and 124, 125, respectively associated with forward and rear ends of the elevator 70, along its sides 81. These sensors are used to determine when a tape cartridge 2 has been effectively seated within the enclosure 80 of the elevator 70, at which point further operation of the drive belts 82 is discontinued, the drive belts 82 are opened, and movement of the elevator 70 is enabled.

The elevator 70 is then moved from the slot 16 which contained the tape cartridge 2 to the tape cartridge unit 3. At this point, the drive belts 82 are again operated to transfer the tape cartridge 2 from the enclosure 80 of the elevator 70 to the tape cartridge unit 3. Full insertion of the tape cartridge 2 within the tape cartridge unit 3 is then accomplished by operating the motor 91 to again rotate the cam 90 and cause the pusher plate 104 to come into contact with the tape cartridge 2 and complete its insertion into the tape cartridge unit 3. Following this, the tape cartridge 2 is operated upon by the tape cartridge unit 3, as desired.

Thereafter, the tape cartridge 2 is released from the tape cartridge unit 3 and returned to the elevator 70, again using the vertical drive belts 82. The elevator 70 then operates to return the tape cartridge 2 to its appropriate slot. However, before actually transferring the tape cartridge 2 to its slot 16, paired sensors 126, 127 are used to verify that the slot 16 remains empty and ready to receive a tape cartridge (ensuring that the slot 16 has not since been filled, in error, by the operator). If the slot 16 is determined to be vacant, the vertical drive belts 82 are closed, and operated to insert the tape cartridge 2 into its appropriate slot 16, returning the tape cartridge 2 to its initial position. The motor 91 is then operated to release the vertical drive belts 82 from the tape cartridge 2, permitting the elevator 70 to be moved to access another tape cartridge 2, as appropriate.

The above-described movements of the elevator 70 relative to the various tape cartridges 2 housed within the magazine 10, and the tape cartridge unit 3, are well suited to control by the processor associated with the controls 7 to achieve a variety of different operational routines. For example, manual modes may be employed to direct the elevator 70 to a tape cartridge 2 selected by the operator, which will then cause the elevator 70 to automatically access the selected tape cartridge. Alternatively, and as is presently preferred, the magazine 10 is provided with a so-called "priority" slot (e.g., the uppermost slot 16 of the magazine), which receives tape cartridges 2 to be operated upon. A sensor pair 128, 129 sights across the priority slot to determine the presence of a tape cartridge 2. At that point, and following an appropriate start command, the elevator 70 is operated to automatically access the tape cartridge 2 in the priority slot, and to later return the tape cartridge 2 to the priority slot following operations upon it.

Also capable of being provided are various automatic modes of operation. For example, tape cartridges may be automatically accessed sequentially, from top to bottom or bottom to top, or randomly according to ordering instructions input using the controls 7 associated with the accessing apparatus 1. Such sequencing can be accomplished in a single pass through the magazine 10, or in repeated sequential passes, if desired. In any event, empty slots (detected by the sensors 126, 127) would be skipped in the course of executing a prescribed sequence, to avoid losses in processing time. Filled slots, resulting from the addition of tape cartridges to the magazine 10, would be appropriately added to the accessing sequence called for.

A priority slot may also be assigned in conjunction with the above-described automatic modes of operation, if desired. In such case, when the priority slot is empty, the accessing apparatus will proceed from cartridge to cartridge, in the prescribed order. However, when a tape cartridge is placed into the priority slot, the prescribed sequence is interrupted so that the next tape cartridge to be accessed (and later returned) is the tape cartridge located in the priority slot. Following this, the prescribed operating sequence is resumed, either where it was discontinued, or at its start, as desired.

Yet another variation is that while the above-described steps are essentially responsive to operator initiated commands, similar sequences may be implemented responsive to commands received from a cooperating host system. Combinations of operator/host initiated sequences are also possible.

It will therefore be understood that various changes in the details, materials and arrangement of parts which have been herein described and illustrated in order to explain the nature of this invention may be made by those skilled in the art within the principle and scope of the invention as expressed in the following claims.

## Claims

1. An apparatus for accessing a plurality of cartridges for introduction to a device for operating upon said cartridges, wherein said device extends from said accessing apparatus, and wherein said apparatus comprises:

a plurality of slots for receiving said cartridges in a structured array;

an elevator movable adjacent to said slots and said device, and including means for transferring said cartridges between said elevator and said slots and said elevator and said device; and

means for controlling movement of said elevator relative to said slots and to said device.

2. The apparatus of claim 1 wherein said cartridges are magnetic recording cartridges.

3. The apparatus of claim 2 wherein said device is a data storage device.

4. The apparatus of claim 1 wherein said cartridges are stacked in a vertical array, and said elevator is vertically movable adjacent to said vertical array.

5. The apparatus of claim 1 wherein said apparatus is substantially enclosed, and includes a door for gaining access to said cartridges.

6. The apparatus of claim 5 wherein said door is lockable responsive to operations of said apparatus.

7. The apparatus of claim 1 wherein said cartridges are receivable within a magazine which is removable from said apparatus.

8. The apparatus of claim 7 wherein said apparatus includes means for latching said magazine within said apparatus when contained by said apparatus.

9. The apparatus of claim 8 wherein said latching means includes means for positively releasing said latching means.

10. The apparatus of claim 9 wherein said releasing means is operatively associated with a handle for carrying said magazine.

11. The apparatus of claim 7 wherein said magazine includes a plurality of configured slots for slidingly receiving said cartridges.

12. The apparatus of claim 11 wherein said slots include means for orienting said cartridges within said slots.

13. The apparatus of claim 12 wherein said orienting means includes a lever for verifying that one of said cartridges is inserted into one of said slots in an upright orientation.

14. The apparatus of claim 13 wherein said verifying lever extends from a side of said magazine and into said slot, at an angle which cooperates with features of said cartridge to withdraw said verifying lever from said slot when receiving an upright cartridge, and to block an inverted cartridge.

15. The apparatus of claim 12 wherein said orienting means includes a lever for verifying that said cartridges are inserted into said slots only from a selected side of said magazine.

16. The apparatus of claim 15 wherein said selected side is the front of said magazine.

17. The apparatus of claim 15 wherein said verifying lever extends from a side of said magazine and into said slot, at an angle which cooperates with features of said cartridge to withdraw said verifying lever from said slot when receiving a cartridge from said selected side of the magazine, and to block a cartridge inserted from a side of the magazine other than said selected side.

18. The apparatus of claim 15 wherein said verifying lever is urged into said slot when said magazine is removed from said apparatus, and withdrawn from said slot when said magazine is contained within said apparatus.

19. The apparatus of claim 18 wherein said verifying lever is withdrawn from said slot by a push rod extending between said verifying lever and side edge portions of said magazine.

20. The apparatus of claim 19 wherein said push rod is aligned with fixed frame portions of said apparatus when said magazine is contained within said apparatus.

21. The apparatus of claim 20 wherein said side edge portions of the magazine and said fixed frame portions of the apparatus include cooperating projections for permitting engagement between said push rod and said fixed frame portions when said magazine is installed within said apparatus, and for preventing engagement with said push rod when said magazine is removed from said apparatus.

22. The apparatus of claim 11 wherein said slots include means for retaining said cartridges within said slots.

23. The apparatus of claim 22 wherein said retaining means includes means for latching a cartridge within said slot.

24. The apparatus of claim 23 wherein said latching means includes a pivotable latch having a catch for engaging features of said cartridge.

25. The apparatus of claim 24 wherein said catch includes sloping face portions for facilitating positive withdrawal of said cartridge from said slot.

26. The apparatus of claim 24 wherein said elevator includes means for engaging said pivotable latch to disengage said catch from said cartridge when said cartridge is to be transferred between said magazine and said elevator.

27. The apparatus of claim 22 wherein said retaining means includes a stop for engaging end portions of said cartridges.

28. The apparatus of claim 27 wherein said stop is pivotable between a position for engaging said end portions, and a position for passing said cartridges.

29. The apparatus of claim 1 wherein said elevator comprises:

a frame defining an enclosure for receiving said cartridges;

means for moving said frame relative to said apparatus and to said cartridges; and

means associated with opposing sides of said enclosure for moving cartridges longitudinally within said enclosure.

30. The apparatus of claim 29 wherein said frame moving means includes a stepper motor for controlled movement of said elevator.

31. The apparatus of claim 29 wherein said cartridge moving means comprises:

opposing belts supported upon movable frames for engaging cartridges and for moving said engaged cartridges within said enclosure; and

means for moving said support frames and said opposing belts into engagement with a cartridge to be moved within said enclosure.

32. The apparatus of claim 31 wherein said support frame moving means is a cam associated with said elevator frame and including means for engaging said support frames to move said support frames relative to said enclosure.

33. The apparatus of claim 29 wherein said elevator further includes means for ejecting cartridges from said enclosure, for introduction into said device for operating upon said cartridges.

34. The apparatus of claim 33 wherein said ejecting means comprises:

a drive plate slidably received within said enclosure;

cam means for reciprocating said drive plate; and

a pusher extending from said drive plate, for retractable movement within said enclosure to engage portions of a cartridge extending therefrom.

35. The apparatus of claim 34 wherein said enclosure includes a slot for engaging a pin extending from said pusher to extend and retract said pusher within said enclosure responsive to reciprocation of said drive plate.

36. The apparatus of claim 1 wherein said controlling means includes means for automatically operating said elevator to move cartridges between said slots and said device for operating upon said cartridges.

37. The apparatus of claim 36 wherein said controlling means operates to randomly select cartridges from said array.

38. The apparatus of claim 36 wherein said controlling means operates to sequentially select cartridges from said array.

39. The apparatus of claim 36 wherein a slot in said array is a priority slot for receiving a cartridge, and wherein said controlling means operates to automatically select the cartridge in said priority slot as a next cartridge to be delivered to said device for operating upon said cartridges.

40. The apparatus of claim 36 wherein said accessing apparatus includes an access door, and wherein said controlling means inhibits further operation of said apparatus when said access door is opened.

41. The apparatus of claim 40 wherein said apparatus includes means for locking said access door.

42. The apparatus of claim 41 wherein said locking means is operated by said controlling means.

43. The apparatus of claim 36 wherein said apparatus includes means for inhibiting operation of said apparatus when a cartridge extends into the path of movement defined by said elevator.

44. The apparatus of claim 43 wherein said inhibiting means includes sensor means for detecting a cartridge extending from said array.

45. The apparatus of claim 43 wherein said inhibiting means includes sensor means for detecting a cartridge extending from said device for operating upon said cartridges.

46. The apparatus of claim 36 wherein said elevator includes sensor means for determining positioning of a cartridge within said elevator.

47. The apparatus of claim 36 wherein said elevator includes sensor means for determining slots containing a tape cartridge and slots which remain empty.

48. A magazine for accepting and housing a plurality of cartridges, wherein said magazine is removably insertable into an apparatus for operating upon said cartridges, and comprises:

an enclosure defining a plurality of slots for receiving said cartridges;

means for orienting said cartridges within said slots as said cartridges are inserted into said slots; and

means for positively retaining inserted cartridges within said slots.

49. The magazine of claim 48 wherein said magazine includes means for latching said magazine within said apparatus when inserted into said apparatus.

50. The magazine of claim 49 wherein said apparatus includes means for positively releasing said latching means.

51. The magazine of claim 50 wherein said releasing means is operatively associated with a handle for carrying said magazine.

52. The magazine of claim 48 wherein said orienting means includes a lever for verifying that one of said cartridges is inserted into one of said slots in an upright orientation.

53. The magazine of claim 52 wherein said verifying lever extends from a side of said magazine and into said slot, at an angle which cooperates with features of said cartridge to withdraw said verifying lever from said slot when receiving an upright cartridge, and to block an inverted cartridge.

54. The magazine of claim 48 wherein said orienting means includes a lever for verifying that said cartridges are inserted into said slots only from a selected side of said magazine.

55. The magazine of claim 54 wherein said selected side is the front of said magazine.

56. The magazine of claim 54 wherein said verifying lever extends from a side of said magazine and into said slot, at an angle which cooperates with features of said cartridge to withdraw said verifying lever from said slot when receiving a cartridge from said selected side of the magazine, and to block a cartridge inserted from a side of the magazine other than said selected side.

57. The magazine of claim 54 wherein said verifying lever is urged into said slot when said magazine is removed from said apparatus, and withdrawn from said slot when said magazine is contained within said apparatus.

58. The magazine of claim 57 wherein said verifying lever is withdrawn from said slot by a push rod extending between said verifying lever and side edge portions of said magazine.

59. The magazine of claim 58 wherein said push rod is aligned with fixed frame portions of said apparatus when said magazine is contained within said apparatus.

60. The magazine of claim 59 wherein said side edge portions of the magazine and said fixed frame portions of the apparatus include cooperating projections for permitting engagement between said push rod and said fixed frame portions when said magazine is installed within said apparatus, and for preventing engagement with said push rod when said magazine is removed from said apparatus.

61. The magazine of claim 48 wherein said retaining means includes means for latching a cartridge within said slot.

62. The magazine of claim 61 wherein said latching means includes a pivotable latch having a catch for engaging features of said cartridge.

63. The magazine of claim 62 wherein said catch includes sloping face portions for facilitating positive withdrawal of said cartridge from said slot.

64. The magazine of claim 62 wherein said apparatus includes means for engaging said pivotable latch to disengage said catch from said cartridge when said cartridge is to be transferred between said magazine and said apparatus.

65. The magazine of claim 48 wherein said retaining means includes a stop for engaging end portions of said cartridges.

66. The magazine of claim 65 wherein said stop is pivotable between a position for engaging said end portions, and a position for passing said cartridges.

FIG. 1

EP 0 392 620 A2

FIG.2

EP 0 392 620 A2

2-VII-PHA 70066

FIG.3

FIG.4

FIG.5

FIG.6

FIG.7

FIG.8

FIG.9

FIG.10